# EUROPEAN PATENT APPLICATION

(11) **EP 4 191 897 A1**
(43) Date of publication of application: **07.06.2023**
(21) Application number: 21851001.4
(22) Date of filing: 30.07.2021
(51) Int. Cl.: H04B 10/073

(54) **APD PERFORMANCE TEST METHOD AND APPARATUS FOR OPTICAL MODULE, AND OPTICAL NETWORK AND MEDIUM**

(30) Priority: 31.07.2020 CN 202010756485
(71) Applicant: ZTE Corporation, Shenzhen, Guangdong 518057 (CN)
(72) Inventor: ZHANG, Zhengmin, Shenzhen Guangdong 518057 (CN); QI, Jian, Shenzhen Guangdong 518057 (CN)
(74) Representative: Petraz, Gilberto Luigi
(86) International application number: PCT/CN2021/109670
(87) International publication number: WO 2022/022693

(57) **Abstract**

The embodiments of the present disclosure provide an avalanche photo diode (APD) performance detection method and apparatus for an optical module, and an optical network and a medium. The method is applicable to an optical network including an optical module and an optical network unit (ONU); the method includes: selecting at least one optical network unit identifier (ONU ID) as a detection ONU ID; allocating a bandwidth to the detection ONU ID and enabling the bandwidth; acquiring received optical power of the optical module for the detection ONU ID; and determining, on the basis of the received optical power, whether the performance of an APD in the optical module deteriorates.

## Description

### CROSS-REFERENCE TO RELATED APPLICATIONS

The present disclosure is based on and claims the priority of Chinese patent application with the application number "202010756485.2" and filed on July 31, 2020, which is incorporated herein by reference in its entirety.

### FIELD OF TECHNOLOGY

Embodiments of the present disclosure relate to the technical field of an optical module, and in particular, to an avalanche photo diode (APD) performance detection method and apparatus, and an optical network and a medium.

### BACKGROUND

How to found out degradation of an APD in an optical module timely and to reduce influence of performance degradation of the APD on normal running of an optical network becomes an urgent problem to be solved.

### SUMMARY

The embodiments of the present disclosure provide an APD performance detection method for an optical module is applicable to an optical network including an optical module. The method includes: selecting at least one optical network unit identifier (ONU ID) as a detection ONU ID; allocating a bandwidth to the detection ONU ID and enabling the bandwidth; acquiring received optical power of an optical module corresponding to the detection ONU ID; and determining, on the basis of the received optical power, whether the performance of an APD in the optical module degrades.

The embodiments of the present disclosure further provide an APD performance detection apparatus for an optical module applicable to an optical network including an optical module. The apparatus includes: a selection module configured to select at least one optical network unit identifier (ONU ID) as a detection ONU ID; an allocation module configured to allocate a bandwidth to the detection ONU ID and to enable the bandwidth; an acquisition module configured to acquire received optical power of an optical module corresponding to the detection ONU ID; and a determination module configured to determine, on the basis of the received optical power, whether the performance of an APD in the optical module degrades.

The embodiments of the present disclosure further provide an optical network, and the optical network includes the above APD performance detection apparatus corresponding to an optical module.

The embodiments of the present disclosure further provide a storage medium configured for computer readable storage. The storage medium stores one or more programs, and the one or more programs are executed by one or more processors, to implement the above APD performance detection method for an optical module.

### BRIEF DESCRIPTION OF THE DRAWINGS

In order to more clearly illustrate the technical solutions in one or more embodiments of the present description, the accompanying drawings required to be used in the description of the embodiments will be briefly described below. Obviously, the accompanying drawings in the following description are merely some embodiments of the present description, and other accompanying drawings would also be obtained by a person skilled in the art according to these accompanying drawings, without any inventive effort.
Fig. 1 is a schematic diagram I of steps of an APD performance detection method in an optical module provided in an embodiment of the present disclosure;
Fig. 2 is a schematic diagram II of steps of an APD performance detection method for an optical module provided in an embodiment of the present disclosure;
Fig. 3 is a schematic diagram III of steps of an APD performance detection method for an optical module provided in an embodiment of the present disclosure;
Fig. 4 is a schematic diagram IV of steps of an APD performance detection method for an optical module provided in an embodiment of the present disclosure;
Fig. 5 is a schematic diagram V of steps of an APD performance detection method for an optical module provided in an embodiment of the present disclosure;
Fig. 6 is a schematic diagram VI of steps of an APD performance detection method for an optical module provided in an embodiment of the present disclosure;
Fig. 7 is a schematic diagram VII of steps of an APD performance detection method for an optical module provided in an embodiment of the present disclosure;
Fig. 8 is a schematic structural diagram of an APD performance detection apparatus for an optical module provided in an embodiment of the present disclosure;
Fig. 9 is a schematic structural diagram of another APD performance detection apparatus for an optical module provided in an embodiment of the present disclosure; and
Fig. 10 is a schematic structural diagram of an optical network provided in an embodiment of the present disclosure.

### DETAILED DESCRIPTION OF THE EMBODIMENTS

In order to make the technical solutions in the present description to be better understood by a person skilled in the art, the technical solutions in one or more embodiments of the present description will be clearly and completely described below in conjunction with the accompanying drawings in the one or more embodiments of the present description. Obviously, the one or more embodiments described are merely some of, rather than all of, the embodiments of the present description. All the other embodiments that are obtained by a person skilled in the art on the basis of the one or more embodiments of the present description and without any inventive effort shall fall within the scope of protection of the present disclosure.

In the industry, a passive optical network (PON) has always been deemed as a future development tendency of an access network, because of the following including that: on the one hand, since a bandwidth provided by the passive optical network can meet present and future requirements for various types of broadband service, the passive optical network is generally optimistic for solving a problem of access to a broadband; and on the other hand, the passive optical network has relatively low expense in terms of either equipment cost or operation and maintenance management overheads. With the promotion of 5G technology, various APPs that have high bandwidth requirements constantly emerge, which raises higher requirement for data forwarding, especially long distance communication, at a local equipment of an optical line terminal (OLT). Therefore, an optical module which has high emitting light power and high receiving sensitivity is used at the OLT for the transceiving of an optical signal.

An avalanche photo diode is generally adopted at a receiving end of an optical module for receiving an optical signal. When the performance of the APD in the optical module degrades, the APD has a decreased sensitivity in receiving the optical signal. As a result, an indicator threshold for normal running of an optical network unit (ONU) which conducts optical signal transmission with the optical module of the OLT, is increased, even some of or all of the ONUs are not online and an ONU are online and offline repeatedly. Maintenance personnel may not immediately found out that the performance of the APD of the optical module degrades. The maintenance personnel may intervene to replace the faulty optical module and confirm whether the APD in the optical module degrades by performing material failure analysis on the faulty optical module, only after a user complaints that the network has failed. Therefore, how to found out the degradation of an APD of an optical module timely in order to reduce the influence of performance degradation of the APD on the normal running of an optical network becomes an urgent problem to be solved.

The aim of one or more embodiments of the present disclosure is to provide an APD performance detection method and apparatus for an optical module, and an optical network and a medium, such that the degradation of an APD of an optical module can be found out timely in order to reduce the influence of performance degradation of the APD on the normal running of an optical network.

The APD performance detection method for an optical module provided in the embodiments of the present disclosure is applicable to an optical network including an optical module and an optical network unit (ONU), such that the performance of an APD of an optical module can be detected timely, normal usage of a user can be avoided from being affected by a fault of an optical network due to that the performance degradation of the APD may not be found out timely, and the influence on the normal running of the optical network can be reduced. The APD performance detection method for an optical module and steps of the method provided in the present description will be described in details below.

It should be noted that an optical network used in the APD performance detection method for an optical module provided in the embodiments of the present disclosure may be a passive optical network (PON); an optical module refers to an optical module of an OLT; ONU IDs may be ONU IDs which are registered with the same PON port, or alternatively may be ONU IDs which are not registered with the same PON port, or alternatively may be a not really existing virtual unit which requires the OLT to allocate only one ONU ID thereto; and an avalanche photo diode may be adopt at the optical module to receive an optical signal sent by the ONU ID.

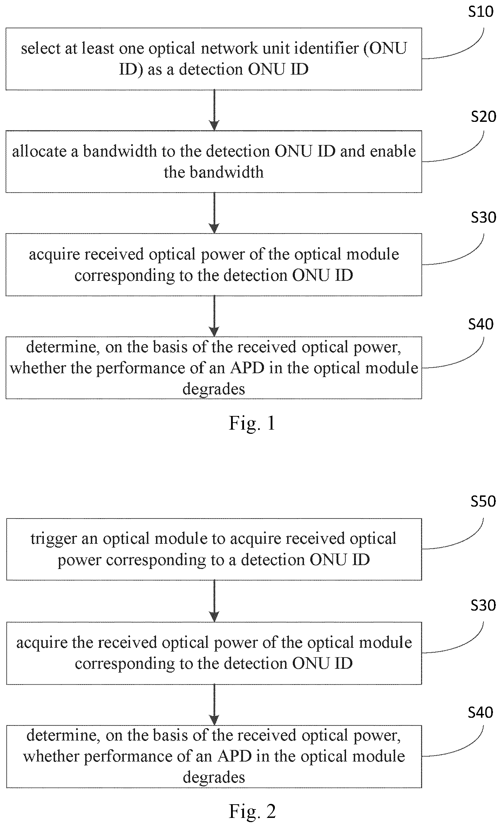

In an embodiment one as shown in Fig. 1, Fig. 1 is a schematic diagram of steps of an APD performance detection method for an optical module provided in an embodiment of the present disclosure. It should be understood that the APD performance detection method for an optical module provided in the embodiment of the present disclosure is applicable to an optical network including an optical module. The APD performance of the optical module is detected with a detection ONU ID, which is simple and convenient to operate. The APD performance detection method for an optical module includes the following steps.

At step 10, at least one optical network unit identifier (ONU ID) is selected as a detection ONU ID.

Existing ONUs in an optical network may be in optical communication with an optical module of an optical line terminal (OLT). For example, there may be a plurality of ONUs in a PON, and there may be one optical module in the OLT. The existing ONUs in the optical network are selected as detection ONU IDs. One or more ONUs may be selected as the detection ONU IDs. In order to make a detection simple, received optical power of one detection ONU ID may be measured by the optical module in the same time period of each detection, and received optical power of a plurality of detection ONU IDs may be respectively measured by the optical module in different time periods, thereby enhancing the accuracy of an APD performance detection result of the optical module.

The detection ONU ID serves as a detection tool for detecting the APD performance of the optical module. The step of determining whether the APD performance degrades may be implemented only by simple logic decision, and the detection operation is simple and convenient.

For simplification and convenience, a selection principle for selecting at least one ONU ID as a detection ONU ID may include randomly selecting any used ONU that has been registered under a PON port, or a vacant ONU that has not been registered under a PON port, and may also include allocating one ONU ID by the OLT to a virtual unit which does not really exist.

At step 20, a bandwidth is allocated to the detection ONU ID and the bandwidth is enabled.

The detection ONU ID is configured with a corresponding transmission container (T-CONT), and an ALLOC ID of the T-CONT has also not been used under the same PON port. On the basis of the T-CONT, a corresponding bandwidth is then allocated to the detection ONU ID, and the corresponding bandwidth is enabled. The detection ONU ID occupies an uplink slot to perform subsequent detection. For example, the OLT sends a trigger signal to the optical module, and the optical module acquires received optical power of a corresponding detection ONU ID, and determines, on the basis of the received optical power, whether APD performance degradation of the optical module occurs.

At step 30, received optical power of an optical module corresponding to the detection ONU ID is acquired.

A dark current is present during a normal running process of the optical module in the optical network. The received optical power of the optical module corresponding to the detection ONU ID may be measured by using the dark current, so as to identify whether the performance of an APD in the optical module degrades. Specifically, when the performance of the APD of the optical module degrades, resistance of the APD increases, current through the APD decreases, and the received optical power of the optical module also changes correspondingly.

The received optical power may be acquired by other apparatuses. Alternatively, the received optical power may be sent to the OLT after the optical module obtains the received optical power, and subsequent step of determining whether the performance of the APD degrades is implemented at the OLT.

At step 40, whether the performance of an APD in the optical module degrades is determined on the basis of the received optical power.

Certainly, the step of determining whether the APD performance degrades may be implemented in the optical module. A warning, such as an alarm, may be generated in an optical module in which degradation of APD performance occurs. In order to avoid making improvement to the optical module, the step of determining whether the APD performance in the optical module degrades on the basis of the received optical power may alternatively be implemented in the OLT, which is not limited herein.

A determination criterion for the degradation of the APD performance may be based on a degradation standard for APD performance in an optical module specification in the industry.

According to the APD performance detection method for an optical module provided in the embodiments of the present disclosure, when an optical network fails, APD performance detection on an optical module is enabled by human intervention, with a defect that a faulty is found relatively late and an advantage that no optical network resource is occupied. The detection method may also automatically start real-time detection when the optical network is running normally, an optical module with degradation of APD performance will be found, and an alarm may be raised timely by the optical module with degradation of APD performance, such that a faulty may be found out and then solved timely, whereas a disadvantage that some optical network resources need to be occupied occurs. In an actual application, corresponding configurations may be made according to different detection requirements.

In some embodiments, referring to Fig. 2, before the step 30 of acquiring the received optical power of the optical module from the detection ONU ID, the APD performance detection method provided in the embodiments of the present disclosure further includes: step 50, triggering the optical module to acquire the received optical power from the detection ONU ID.

The optical module in the optical network does not need to acquire the received optical power corresponding to the detection ONU ID when performing normal operation. Therefore, a trigger (trig) signal is sent by the OLT before the received optical power of the optical module corresponding to the detection ONU ID is acquired, so as to trigger the optical module to acquire the received optical power of the optical module by itself corresponding to the detection ONU ID. Therefore, the received optical power of the optical module corresponding to the detection ONU ID is acquired without the assist of other apparatuses.

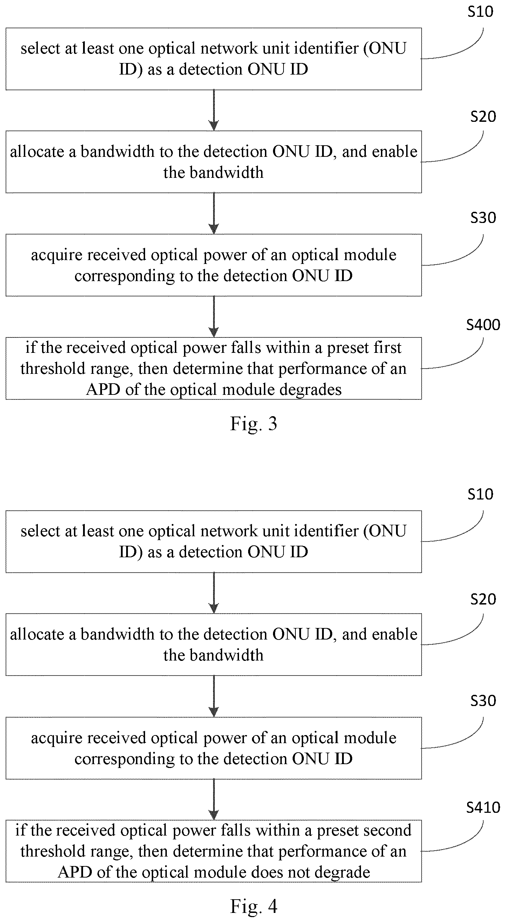

In some embodiments, referring to Fig 3, the step 40 of determining, on the basis of the received optical power, whether the performance of the APD in the optical module degrades in the APD performance detection method provided in the embodiment of the present disclosure, specifically includes: step 400, if the received optical power is within a preset first threshold range, determining that the performance of the APD in the optical module degrades.

After the received optical power of the optical module corresponding to the detection ONU ID is acquired, whether the performance of the APD in the optical module degrades is determined on the basis of the received optical power. The preset first threshold range is a range greater than or equal to -35 dBm and less than or equal to -5 dBm. If the received optical power falls within the preset first threshold range, the performance of the APD in the optical module is determined to degrade.

The preset first threshold range may be set according to the standard specified in the optical module specification in the industry.

In some embodiments, referring to Fig 4, the step 40 of determining, on the basis of the received optical power, whether the performance of the APD in the optical module degrades in the APD performance detection method provided in the embodiment of the present disclosure, specifically includes: step 410, if the received optical power is within a preset second threshold range, determining that the performance of the APD in the optical module does not degrade.

The preset second threshold range is a range less than -35 dBm. If the received optical power falls within the preset second threshold range, the APD performance of the optical module does not degrade.

Similarly, the preset second threshold range may be set according to the standard specified in the optical module specification in the industry and according to the actual application.

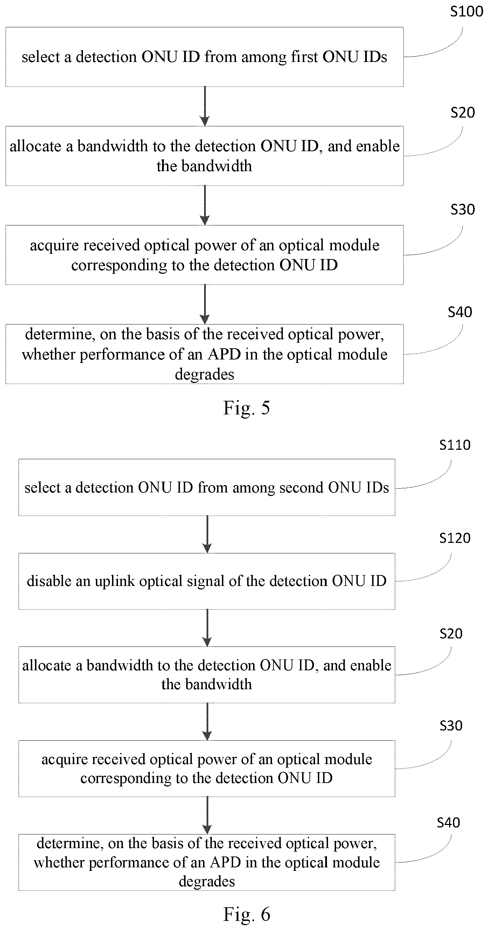

In some embodiments, referring to Fig 5, the at least one ONU ID includes vacant first ONU IDs, and the step 10 of selecting at least one ONU ID as the detection ONU ID in the APD performance detection method provided in the embodiment of the present disclosure, specifically includes: step 100, selecting a detection ONU ID from among the first ONU IDs.

The first ONU IDs are vacant ONU IDs, have not been registered with the optical network and are also not started for use in the optical network. If at least one ONU ID is selected from among the first ONU IDs as the detection ONU ID, corresponding bandwidth configuration and bandwidth enabling need to be performed on the detection ONU ID.

One ONU ID that is not used is found. For example, 50 ONU IDs have been registered under the same PON port, but 128 ONU IDs can be registered under the PON port. Then, at least one of the 78 vacant ONU IDs may be used as the detection ONU ID.

The benefit of selecting at least one, from the vacant first ONU IDs, as the detection ONU ID, lies in that the normal running of the optical network is not affected during the entire detection process. Therefore, the vacant first ONU ID is preferentially selected as the detection ONU ID.

As an example, the step process of the APD performance detection method for an optical module provided in an embodiment of the present disclosure will be described below in details.

1.1 An ONU ID that is not used is selected.

Assuming that the same PON port supports the registration of 128 ONU IDs, 64 ONU IDs of which have been used, one ONU ID is randomly selected from among 64 ONU IDs that are not used as detection ONU IDs.

1.2 A T-CONT that has not been used is allocated to the detection ONU ID, a bandwidth is allocated and the bandwidth is enabled.

One ALLOC ID that has not been used is allocated to the detection ONU ID, and a bandwidth is allocated. It is recommended that, a default ALLOC ID having the same number as the detection ONU ID may be used, and other service ALLOC IDs may alternatively be used.

1.3 A trigger signal is sent.

An OLT sends, to an optical module, a trigger signal for receiving optical power, so as to enable the optical module to acquire the received optical power corresponding to the detection ONU ID.

1.4 Received optical power data of the optical module is acquired.

A received optical power value corresponding to the detection ONU ID is calculated by an optical module received optical power register.

1.5 Comparison and determination are performed on the received optical power value.

The received optical power value is respectively compared with the preset first threshold range and the preset second threshold range.

1.6 A conclusion of whether an APD of the optical module degrades is obtained.

When the received optical power value falls within the preset first threshold range, the APD performance of the optical module is considered to degrade. When the received optical power value falls within the preset second threshold range, the APD performance of the optical module is considered to not degrade.

In some embodiments, referring to Fig 6, the optical network further includes second ONU IDs that are used, the step 10 of selecting at least one ONU ID as a detection ONU ID in the APD performance detection method provided in the embodiment of the present disclosure, specifically includes step 110 and step 120.

At the step 110, a detection ONU ID is selected from among the second ONU IDs.

At least one of the ONU IDs in the optical network that are used is selected as the detection ONU ID, and before performing detection, the detection ONU ID as an optical network unit normally operates. Therefore, the optical network may be affected when the detection is performed by this type of detection ONU ID, but the optical network is affected very slightly due to a detection time period.

For example, 50 ONU IDs have been registered under the same PON port, and one of the 50 ONU IDs is selected as the detection ONU ID to detect whether the performance of the APD of the optical module degrades.

At the step 120, an uplink optical signal of the detection ONU ID is disabled.

The OLT sends a disable instruction to the detection ONU ID, for example, the state of a disable serial number in a PLOAM message is disable, so that the uplink optical signal of the detection ONU ID is disabled.

A bandwidth is normally allocated to the T-CONT of the detection ONU ID, and is enabled. A trigger signal is sent to the optical module, and the optical module acquires the received optical power corresponding to the detection ONU ID according to the trigger signal. According to the received optical power, whether the APD of the optical module degrades is determined. The PLOAM message is sent to the detection ONU ID after the detection is completed. If the state of the disable serial number in the PLOAM is enabled, a sending laser of the detection ONU ID is recovered to send the uplink optical signal.

As another example, the step process of the APD performance detection method for an optical module provided in an embodiment of the present disclosure will be described below in details.

1.1 A certain ONU ID that is being used in an optical network is selected as a detection ONU ID.

Assuming that the same PON port supports the registration of 128 ONU IDs, 64 ONU IDs of which have been registered and used, one ONU ID is randomly selected from among the 64 ONU IDs as a detection ONU ID.

1.2 A sending laser of the ONU ID is disabled.

The OLT sends a PLOAM message to the detection ONU ID, with the state of a disable serial number in the PLOAM message being disabled, so that the sending laser of the detection ONU ID does not send an uplink optical signal anymore.

1.3 A bandwidth is allocated to the detection ONU ID and the bandwidth is enabled.

Effective bandwidth allocation is performed on one of the ALLOC IDs of the detection ONU ID (it is recommended to use a default ALLOC ID, and the default ALLOC ID has the same numbering as the detection ONU). The bandwidth allocation may alternatively be performed on other service ALLOC IDs, and the bandwidth is enabled.

1.4 A trigger signal is sent.

The OLT sends a trigger signal to the optical module, such that the optical module is started to acquire the received optical power corresponding to the detection ONU ID.

1.5 The received optical power of the optical module is acquired.

The optical module calculates, based on output from an optical module received optical power register, a received optical power value corresponding to the detection ONU ID.

1.6 Comparison and determination are performed on the received optical power value.

The received optical power value is respectively compared with the preset first threshold range and the preset second threshold range.

1.7 A conclusion of whether an APD of the optical module degrades is obtained.

When the received optical power value falls within the preset first threshold range, the performance of the APD of the optical module is considered to degrade. When the received optical power value falls within the preset second threshold range, the performance of the APD of the optical module is considered to not degrade.

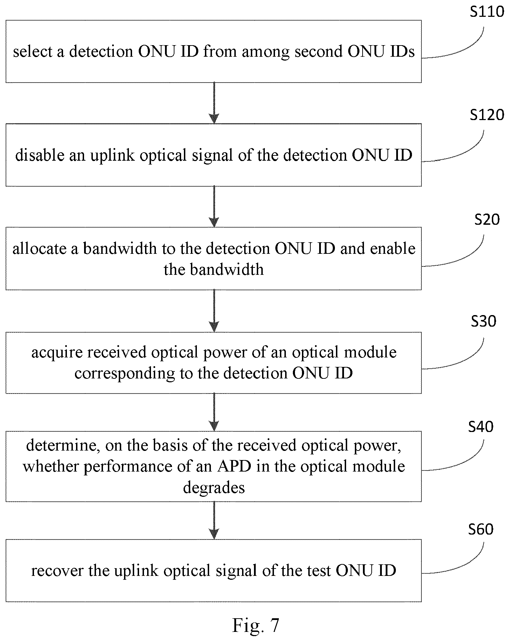

In some embodiments, referring to Fig. 7, when the detection ONU ID is selected from among the second ONUs, after the step 40 of determining whether the performance of the APD in the optical module degrades on the basis of the received optical power, the APD performance detection method provided in the embodiments of the present disclosure further includes: step 60, recovering the uplink optical signal of the detection ONU ID.

The OLT starts the sending laser of the detection ONU ID and recovers the uplink optical signal of the detection ONU ID, such that the ONU normally operates in the optical network. For example, the OLT sends the PLOAM message, with the state of the disable serial number in the PLOAM message being enabled, such that the sending laser of the detection ONU ID emits light and normally operates.

It can be seen that the OLT serves as a control end to implement the sending of various control instructions. The step of determining whether the APD performance degrades may alternatively to be implemented on the OLT, and the OLT performs analysis to obtain a detection result. Therefore, there is almost no need to make improvement to the optical module, and only relatively small improvement is made in the level of software. However, the degradation the APD performance of the optical module can be early founded and early solved , thereby avoiding bad influence such as user complaints caused by the faulty of the overall optical network.

It can be seen, through the above analysis, that the APD performance detection method for an optical module provided in the embodiments of the present disclosure is applicable to an optical network that includes an optical module. The optical module refers to an optical module of an OLT. At least one optical network unit identifier (ONU ID) may be an ONU ID that really exists, for example, an ONU ID that is registered under the same PON port as the optical module, and may alternatively be a virtual ONU that does not really exist, for example, an ONU ID that is not registered under the PON port. The virtual ONU involves no entity, and only needs the OLT to allocate one ONU ID thereto. In order to avoid affecting the normal running of the optical network, the detection ONU IDs may be ONU IDs that are not registered under the same PON port. When the detection ONU ID occupies an uplink slot for performing detection after a bandwidth is allocated to the detection ONU ID and the bandwidth is enabled, received optical power of the optical module corresponding to the detection ONU ID is acquired, and whether the performance of an APD in the optical module degrades is then determined on the basis of the received optical power. It can be seen that the APD performance of the optical module can be detected in real time by the architecture of the optical network itself, and operations are simple and convenient. Moreover, an optical module in which degradation of APD performance occurs can be found and replaced timely, thereby reducing the influence of the degradation of the APD performance on the normal running of the optical network.

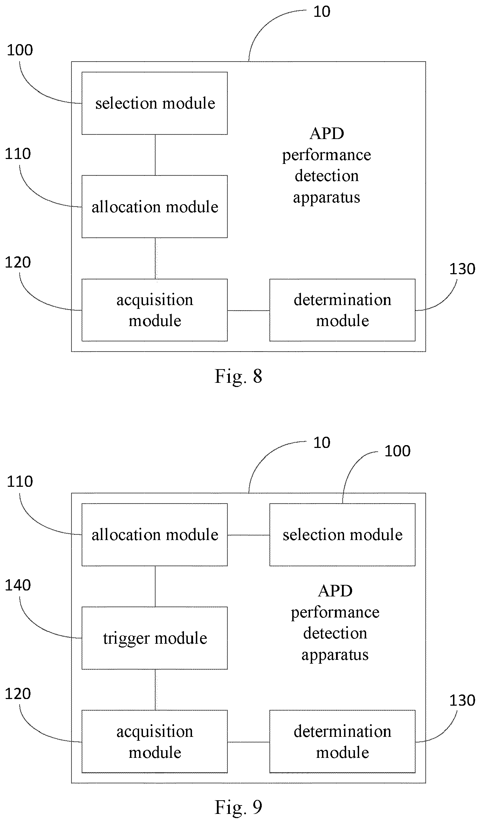

Embodiment II, as shown in Fig. 8, relates to an APD performance detection apparatus 10 for an optical module provided in an embodiment of the present disclosure, and the APD performance detection apparatus is applicable to an optical network including an optical module. The apparatus includes: a selection module 100, an allocation module 110, an acquisition module 120 and a determination module 130.

The selection module 100 is configured to select at least one ONU ID as a detection ONU ID.

Existing ONUs in an optical network may be in optical communication with an optical module of an optical line terminal (OLT). For example, there may be a plurality of ONUs in a PON, and there may be one optical module in the OLT. The existing ONUs in the optical network are selected as the detection ONU IDs. One or more ONUs may be selected as the detection ONU IDs. In order to make a detection simple, received optical power of one detection ONU ID may be measured by the optical module in the same time period of each detection, and received optical power of a plurality of detection ONU IDs may be respectively measured by the optical module in different time periods, thereby enhancing the accuracy of an APD performance detection result of the optical module.

The detection ONU ID serves as a detection tool for detecting the APD performance of the optical module. The step of determining whether the APD performance degrades may be implemented at an OLT end only by simple logic decision, without specially building a new detection apparatus, and detection operation is simple and convenient.

For simplification and convenience, a selection principle for selecting at least one from the ONUs as a detection ONU ID may include randomly selecting any used or vacant ONU that has been registered under a PON port, avoiding to access a new ONU to the optical network.

The allocation module 110 is configured to allocate a bandwidth to the detection ONU ID and enable the bandwidth.

The detection ONU ID is configured with a corresponding transmission container (T-CONT), and an ALLOC ID of the T-CONT has also not been used under the same PON port. On the basis of the T-CONT, a corresponding bandwidth is then allocated to the detection ONU ID, and the corresponding bandwidth is enabled. The detection ONU ID occupies an uplink slot to perform subsequent detection. For example, the OLT sends a trigger signal to the optical module, and the optical module acquires received optical power of a corresponding detection ONU ID, and determines, on the basis of the received optical power, whether APD performance degradation of the optical module occurs.

The acquisition module 120 is configured to acquire received optical power of an optical module corresponding to the detection ONU ID.

A dark current is present during a normal running process of the optical module in the optical network. The received optical power of the optical module corresponding to the detection ONU ID may be measured using the dark current, so as to identify whether the performance of an APD in the optical module degrades. Specifically, when the performance of the APD of the optical module degrades, the resistance of the APD increases, the current through the APD decreases, and the received optical power of the optical module also changes correspondingly.

The received optical power may be acquired by other apparatuses. Alternatively, the received optical power may be sent to the OLT after the optical module obtains the received optical power, and subsequent step of determining whether the performance of the APD degrades is implemented at the OLT.

The determination module 130 is configured to determine, on the basis of the received optical power, whether the performance of an APD in the optical module degrades.

Certainly, the step of determining whether the APD performance degrades may be implemented in the optical module. A warning, such as an alarm, may be generated in an optical module in which degradation of APD performance occurs. In order to avoid making improvement to the optical module, the step of determining whether the performance of the APD in the optical module degrades on the basis of the received optical power may alternatively be implemented in the OLT, which is not limited herein.

A determination criterion for the degradation of the APD performance may be based on a degradation standard for APD performance in an optical module specification in the industry.

According to the APD performance detection method for an optical module provided in the embodiments of the present disclosure, when an optical network fails, an APD performance detection operation on an optical module is enabled by human intervention, with a defect that a fault is found relatively late, and an advantage that no optical network resource is occupied. The detection method may automatically start a real-time detection when the optical network normally is running normally, an optical module with degradation of APD performance will be found, and an alarm may be raised timely by the optical module with degradation of APD performance, such that a faulty may be found out and then solved timely, whereas a disadvantage that some optical network resources need to be occupied occurs. In an actual application, corresponding configurations may be made according to different detection requirements.

Referring to Fig. 9, the APD performance detection apparatus provided in the embodiment of the present disclosure further includes a trigger module 140. The trigger module 140 is configured to trigger the optical module to acquire received optical power corresponding to the detection ONU ID before acquiring the received optical power of the optical module corresponding to the detection ONU ID.

The optical module in the optical network does not need to acquire the received optical power corresponding to the detection ONU ID when performing normal operation. Therefore, a trigger (trig) signal is sent by the OLT before the received optical power of the optical module corresponding to the detection ONU ID is acquired, so as to trigger the optical module to acquire the received optical power of the optical module by itself corresponding to the detection ONU ID. Therefore, the received optical power of the optical module corresponding to the detection ONU ID is acquired without the assist of other apparatuses. The detection apparatus is simply and completely derived from components in the optical network.

It can be seen, through the above analysis, that the APD performance detection method for an optical module provided in the embodiments of the present disclosure is applicable to an optical network that includes an optical module. The optical module refers to an optical module of an OLT. At least one optical network unit identifier (ONU ID) may be an ONU ID that really exists, for example, an ONU ID that is registered under the same PON port as the optical module, and may alternatively be a virtual ONU that does not really exist, for example, an ONU ID that is not registered under the PON port. The virtual ONU involves no entity, and only needs the OLT to allocate one ONU ID thereto. In order to avoid affecting the normal running of the optical network, the detection ONU IDs may be ONU IDs that are not registered under the same PON port. When the detection ONU ID occupies an uplink slot for performing detection after a bandwidth is allocated to the detection ONU ID and the bandwidth is enabled, received optical power of the optical module corresponding to the detection ONU ID is acquired, and whether the performance of an APD in the optical module degrades is then determined on the basis of the received optical power. It can be seen that the APD performance of the optical module can be detected in real time by the architecture of the optical network itself, and operations are simple and convenient. Moreover, an optical module in which degradation of APD performance occurs can be found and replaced timely, thereby reducing the influence of the degradation of the APD performance on the normal running of the optical network.

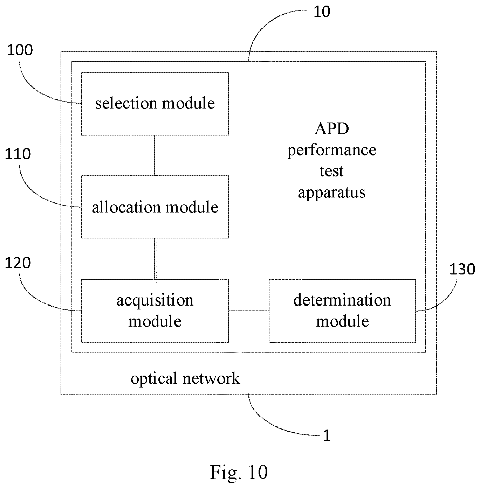

Embodiment III, as shown in Fig. 10, relates to an optical network 1 provided in the embodiment of the present disclosure, and the optical network 1 includes the above APD performance detection apparatus 10 for an optical module. The APD performance detection apparatus 10 for an optical module includes: a selection module 100, an allocation module 110, an acquisition module 120 and a determination module 130.

The selection module 100 is configured to select at least one ONU ID as a detection ONU ID.

Existing ONUs in an optical network may be in optical communication with an optical module of an optical line terminal (OLT). For example, there may be a plurality of ONUs in a PON, and there may be one optical module in the OLT. The existing ONUs in the optical network are selected as the detection ONU ID. One or more ONUs may be selected as the detection ONU ID. In order to make a detection simple, received optical power of one detection ONU ID may be measured by the optical module in the same time period of each detection, and received optical power of a plurality of detection ONU IDs may be respectively measured by the optical module in different time periods, thereby enhancing the accuracy of an APD performance detection result of the optical module.

The detection ONU ID serves as a detection tool for detecting the APD performance of the optical module. The step of determining whether the APD performance degrades may be implemented at an OLT end only by simple logic decision, without specially building a new detection apparatus, and the detection operation is simple and convenient.

For simplification and convenience, a selection principle for selecting at least one from the ONUs as a detection ONU ID may include randomly selecting any used or vacant ONU that has been registered under a PON port, avoiding to access a new ONU to the optical network.

The allocation module 110 is configured to allocate a bandwidth to the detection ONU ID and enable the bandwidth.

The detection ONU ID is configured with a corresponding transmission container (T-CONT), and an ALLOC ID of the T-CONT has also not been used under the same PON port. On the basis of the T-CONT, a corresponding bandwidth is then allocated to the detection ONU ID, and the corresponding bandwidth is enabled. The detection ONU ID occupies an uplink slot to perform subsequent detection. For example, the OLT sends a trigger signal to the optical module, and the optical module acquires received optical power of a corresponding detection ONU ID, and determines, on the basis of the received optical power, whether APD performance degradation of the optical module occurs.

The acquisition module 120 is configured to acquire received optical power of an optical module corresponding to the detection ONU ID.

A dark current is present during a normal running process of the optical module in the optical network. The received optical power of the optical module corresponding to the detection ONU ID may be measured by using the dark current, so as to identify whether the performance of an APD in the optical module degrades. Specifically, when the performance of the APD of the optical module degrades, the resistance of the APD increases, the current through the APD decreases, and the received optical power of the optical module also changes correspondingly.

The received optical power may be acquired by using other apparatuses. Alternatively, the received optical power may be sent to the OLT after the optical module obtains the received optical power, and subsequent step of determining whether the performance of the APD degrades is implemented at the OLT.

The determination module 130 is configured to determine, on the basis of the received optical power, whether the performance of an APD in the optical module degrades.

Certainly, the step of determining whether the APD performance degrades may be implemented in the optical module. A warning, such as an alarm, may be generated in an optical module in which degradation of APD performance occurs. In order to avoid making improvement to the optical module, the step of determining whether the performance of the APD in the optical module degrades on the basis of the received optical power may alternatively be implemented in the OLT, which is not limited herein.

A determination criterion for the degradation of the APD performance may be based on a degradation standard for APD performance in an optical module specification in the industry.

According to the APD performance detection method for an optical module provided in the embodiments of the present disclosure, when an optical network fails, an APD performance detection operation on an optical module is enabled by human intervention, with a defect that a fault is found relatively late, and an advantage that no optical network resource is occupied. Through the detection method may automatically start a real-time detection when the optical network normally is running normally, an optical module with degradation of APD performance will be found, and an alarm may be raised timely by the optical module with degradation of APD performance, such that a faulty may be found out and then solved timely, whereas a disadvantage that some optical network resources need to be occupied occurs. In an actual application, corresponding configurations may be made according to different detection requirements.

It can be seen, through the above analysis, that the APD performance detection method for an optical module provided in the embodiments of the present disclosure is applicable to an optical network that includes an optical module. The optical module refers to an optical module of an OLT. At least one optical network unit identifier (ONU ID) may be an ONU ID that really exists, for example, an ONU ID that is registered under the same PON port as the optical module, and may alternatively be a virtual ONU that does not really exist, for example, an ONU ID that is not registered under the PON port. The virtual ONU involves no entity, and only needs the OLT to allocate one ONU ID thereto. In order to avoid affecting the normal running of the optical network, the detection ONU IDs may be ONU IDs that are not registered under the same PON port. When the detection ONU ID occupies an uplink slot for performing detection after a bandwidth is allocated to the detection ONU ID and the bandwidth is enabled, received optical power of the optical module corresponding to the detection ONU ID is acquired, and whether the performance of an APD in the optical module degrades is then determined on the basis of the received optical power. It can be seen that the APD performance of the optical module can be detected in real time by the architecture of the optical network itself, and operations are simple and convenient. Moreover, an optical module in which degradation of APD performance occurs can be found and replaced timely, thereby reducing the influence of the degradation of the APD performance on the normal running of the optical network.

Embodiment IV in the embodiments of the present disclosure provides a storage medium as computer-readable storage. The storage medium stores one or more programs executable by one or more processors, so as to implement the steps of the APD performance detection method for an optical module as shown in any one of Fig. 1 to Fig. 7, and the one or more programs is executed to implement specifically the following steps .

At step 10, at least one optical network unit identifier (ONU ID) is selected as a detection ONU ID.

Existing ONUs in an optical network may be in optical communication with an optical module of an optical line terminal (OLT). For example, there may be a plurality of ONUs in a PON, and there may be one optical module in the OLT. The existing ONUs in the optical network are selected as the detection ONU IDs. One or more ONUs may be selected as the detection ONU IDs. In order to make a detection simple, received optical power of one detection ONU ID may be measured by the optical module in the same time period of each detection, and received optical power of a plurality of detection ONU IDs may be respectively measured by the optical module in different time periods, thereby enhancing the accuracy of an APD performance detection result of the optical module.

The detection ONU ID serves as a detection tool for detecting the APD performance of the optical module. The step of determining whether the APD performance degrades may be implemented only by simple logic decision, and the detection operation is simple and convenient.

For simplification and convenience, a selection principle for selecting at least one ONU ID as a detection ONU ID may include randomly selecting any used ONU that has been registered under a PON port, or a vacant ONU that has not been registered under a PON port, and may also include allocating one ONU ID by the OLT to a virtual unit which does not really exist.

At step 20, a bandwidth is allocated to the detection ONU ID and the bandwidth is enabled.

The detection ONU ID is configured with a corresponding transmission container (T-CONT), and an ALLOC ID of the T-CONT has also not been used under the same PON port. On the basis of the T-CONT, a corresponding bandwidth is then allocated to the detection ONU ID, and the corresponding bandwidth is enabled. The detection ONU ID occupies an uplink slot to perform subsequent detection. For example, the OLT sends a trigger signal to the optical module, and the optical module acquires received optical power of a corresponding detection ONU ID, and determines, on the basis of the received optical power, whether APD performance degradation of the optical module occurs.

At step 30, received optical power of an optical module corresponding to the detection ONU ID is acquired.

A dark current is present during a normal running process of the optical module in the optical network. The received optical power of the optical module corresponding to the detection ONU ID may be measured by using the dark current, so as to identify whether the performance of an APD in the optical module degrades. Specifically, when the performance of the APD of the optical module degrades, resistance of the APD increases, current through the APD decreases, and the received optical power of the optical module also changes correspondingly.

The received optical power may be acquired by other apparatuses. Alternatively, the received optical power may be sent to the OLT after the optical module obtains the received optical power, and subsequent step of determining whether the performance of the APD degrades is implemented at the OLT.

At step 40, whether the performance of an APD in the optical module degrades is determined on the basis of the received optical power.

Certainly, the step of determining whether the APD performance degrades may be implemented in the optical module. A warning, such as an alarm, may be generated in an optical module in which degradation of APD performance occurs. In order to avoid making improvement to the optical module, the step of determining whether the performance of the APD in the optical module degrades on the basis of the received optical power may alternatively be implemented in the OLT, which is not limited herein.

A determination criterion for the degradation of the APD performance may be based on a degradation standard for APD performance in an optical module specification in the industry.

According to the APD performance detection method for an optical module provided in the embodiments of the present disclosure, when an optical network fails, an APD performance detection operation on an optical module is enabled by human intervention, with a defect that a faulty is found relatively late, and an advantage that no optical network resource is occupied. The detection method may automatically start real-time detection when the optical network normally is running normally, an optical module with degradation of APD performance will be found, and an alarm may be raised timely by the optical module with degradation of APD performance, such that a faulty may be found out and then solved timely, whereas a disadvantage that some optical network resources need to be occupied occurs. In an actual application, corresponding configurations may be made according to different detection requirements.

It can be seen, through the above analysis, that the APD performance detection method for an optical module provided in the embodiments of the present disclosure is applicable to an optical network that includes an optical module. The optical module refers to an optical module of an OLT. At least one optical network unit identifier (ONU ID) may be an ONU ID that really exists, for example, an ONU ID that is registered under the same PON port as the optical module, and may alternatively be a virtual ONU that does not really exist, for example, an ONU ID that is not registered under the PON port. The virtual ONU involves no entity, and only needs the OLT to allocate one ONU ID thereto. In order to avoid affecting the normal running of the optical network, the detection ONU ID may be ONU IDs that are not registered under the same PON port. When the detection ONU ID occupies an uplink slot for performing detection after a bandwidth is allocated to the detection ONU ID and the bandwidth is enabled, received optical power of the optical module for the detection ONU ID is acquired, and whether the performance of an APD in the optical module degrades is then determined on the basis of the received optical power. It can be seen that the APD performance of the optical module can be detected in real time by the architecture of the optical network itself, and operations are simple and convenient. Moreover, an optical module in which degradation of APD performance occurs can be found and replaced timely, thereby reducing the influence of the degradation of the APD performance on the normal running of the optical network.

In summary, the above is merely preferred embodiments of the description, and is not intended to limit the scope of protection of the description. Any modification, equivalent substitution, improvement, and the like made within the spirit and principle of the present description shall be included into the scope of protection of the present description.

The system, apparatus, module or unit specified in the above one or more embodiments can specifically be implemented by a computer chip or an entity, or implemented by a product with a certain function. A typical implementation device is a computer. Specifically, the computer may, for example, be a personal computer, a laptop computer, a cellular phone, a camera phone, a smart phone, a personal digital assistant, a media player, a navigation device, an e-mail device, a game console, a tablet computer, a wearable device or a combination of any devices among these devices.

A computer-readable storage medium includes permanent, non-permanent, removable and non-removable media, and information storage can be realized through any method or technology. Information may be modules of computer-readable instructions, data structures and programs, or other data. Examples of a computer storage medium include but are not limited to a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, tape or disk storage or other magnetic storage devices, or any other non-transmission media that may be used to store information capable of being accessed by a computing device. According to the definitions herein, the computer-readable medium does not include transitory media, such as modulated data signals and carrier waves.

It also needs to be noted that the terms "including", "containing" or any other variations thereof are intended to cover non-exhaustive inclusion, so that processes, methods, merchants or devices including a series of elements not only include those elements but also include other elements which are not listed expressly or include all inherent elements of such processes, methods, merchants or devices. If no more limitations are made, an element limited by "include a/an..." does not exclude other same elements existing in the process, the method, the article, or the device which includes the element.

All embodiments in the present disclosure are described in a progressive way, each embodiment mainly describes the differences from other embodiments, and the same and similar parts among the embodiments can be referenced mutually. In particular, a system embodiment is basically similar to a method embodiment, and therefore is described briefly; and for related parts, reference may be made to partial descriptions in the method embodiment.

Various embodiments of the present disclosure have been described above. The other embodiments fall within the scope of the appended claims. In some cases, actions or steps described in the claims may be executed in an order different from that in the embodiments, and desired results can still be achieved. In addition, the processes described in the accompanying drawings are not necessarily required to follow a specific shown order or a continuous order to achieve desired results. In some implementations, multitasking and parallel processing are also possible or may be advantageous.

## Claims

1. An APD performance detection method for an optical module applicable to an optical network comprising an optical module, comprising:
selecting at least one optical network unit identifier (ONU ID) as a detection ONU ID;
allocating a bandwidth to the detection ONU ID and enabling the bandwidth;
acquiring received optical power of the optical module corresponding to the detection ONU ID; and
determining, on the basis of the received optical power, whether performance of an APD in the optical module degrades.

2. The APD performance detection method according to claim 1, wherein before acquiring the received optical power of the optical module corresponding to the detection ONU ID, the method further comprises:
triggering the optical module to acquire the received optical power corresponding to the detection ONU ID.

3. The APD performance detection method according to any one of claims 1 to 2, wherein the determining, on the basis of the received optical power, whether the performance of the APD in the optical module degrades, comprises:
in a case where the received optical power is within a preset first threshold range, determining that the performance of the APD of the optical module degrades; and
in a case where the received optical power is within a preset second threshold range, determining that the performance of the APD of the optical module does not degrade.

4. The APD performance detection method according to any one of claims 1 to 3, wherein the at least one ONU ID comprises vacant first ONU IDs, and
the selecting at least one ONU ID as the detection ONU ID comprises:
selecting the detection ONU ID from among the first ONU IDs.

5. The APD performance detection method according to any one of claims 1 to 3, wherein the optical network further comprises second ONU IDs which are used, and
the selecting at least one ONU ID as the detection ONU ID comprises:
selecting the detection ONU ID from among the second ONU IDs; and
disabling an uplink optical signal of the detection ONU ID.

6. The APD performance detection method according to claim 5, wherein in the case where the detection ONU ID is selected from among the second ONU IDs, after the determining, on the basis of the received optical power, whether the performance of the APD in the optical module degrades, the method further comprises:
recovering the uplink optical signal of the detection ONU ID.

7. An APD performance detection apparatus for an optical module applicable to an optical network comprising an optical module, comprising:
a selection module configured to select at least one optical network unit identifier (ONU ID) as a detection ONU ID;
an allocation module configured to allocate a bandwidth to the detection ONU ID and to enable the bandwidth;
an acquisition module configured to acquire received optical power of the optical module corresponding to the detection ONU ID; and
a determination module configured to determine, on the basis of the received optical power, whether performance of an APD in the optical module degrades.

8. The APD performance detection apparatus according to claim 7, wherein the apparatus further comprises a trigger module, and the trigger module is configured to:
trigger the optical module to acquire the received optical power corresponding to the detection ONU ID before the received optical power of the optical module corresponding to the detection ONU ID is acquired.

9. An optical network, comprising the APD performance detection apparatus for an optical module according to claim 7 or 8.

10. A storage medium for computer readable storage, wherein the storage medium stores one or more programs, and the one or more programs are executed, by one or more processors, to implement the APD performance detection method for an optical module according to any one of claims 1 to 6.
